# EUROPEAN PATENT APPLICATION

(11) **EP 2 088 797 A1**
(43) Date of publication of application: **12.08.2009**
(21) Application number: 07721252.0
(22) Date of filing: 24.05.2007
(51) Int. Cl.: H04Q 7/38

(54) **A METHOD FOR PROCESSING AN ERROR OF A WIRELESS NETWORK CONTROLLER IN A PACKET DOMAIN SIGNLE TUNNEL**

(30) Priority: 07.11.2006 CN 200610114347
(71) Applicant: ZTE Corporation, Shenzhen city, Guangdong 518057 (CN)
(72) Inventor: CAI, Jiannan, Shenzhen City Guangdong 518057 (CN); ZHU, Jinguo, Shenzhen City Guangdong 518057 (CN)
(74) Representative: Bokinge, Ole
(86) International application number: PCT/CN2007/001679
(87) International publication number: WO 2008/055399

(57) **Abstract**

A method for processing an error of a radio network controller in a packet domain direct tunnel comprises the following steps: after a gateway GPRS support node receives an error indication of the radio network controller, it prevents the following downstream data packets from being sent to the radio network controller continuously; and the gateway GPRS support node informs a serving GPRS support node that a user plane of the radio network controller is abnormal, wherein the implementation manner of preventing the following downstream data packets from being sent to the radio network controller continuously comprises deleting address and user plane tunnel information of the radio network controller or setting the corresponding packet data protocol context to be invalid.

## Description

### Technical Field

The present invention relates to a packet domain in the third generation mobile communication system, and more particularly to a method for processing an error when an abnormity occurs in a radio network controller (RNC) in a packet domain single-tunnel scheme.

### Technical Background

General packet radio service (GPRS) is a second generation mobile communication network based on packet switching, and its relevant standards are established by European Telecommunication Standards Institute (ETSI). In the third generation mobile communication system, GPRS evolves as universal mobile telecommunication system packet switch (UMTS PS) domain.

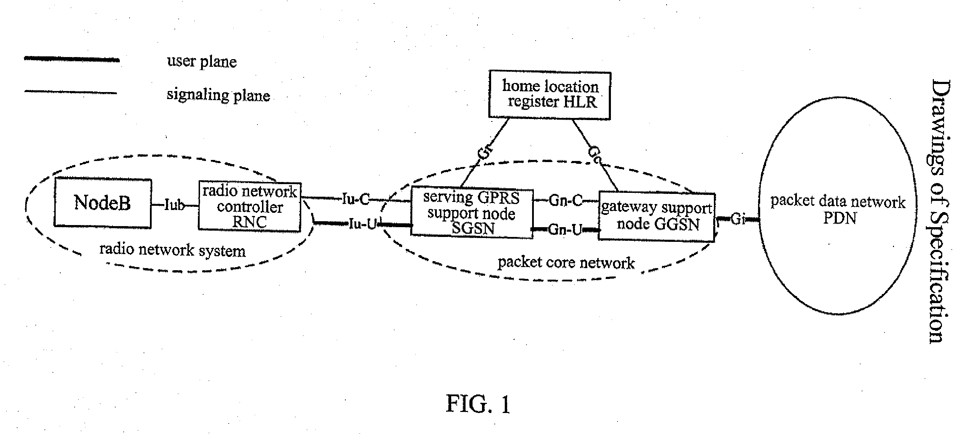

As shown in Fig. 1, the network architecture for UMTS PS is provided. The network architecture comprises the following network elements:
a nodeB for providing air connection for a terminal;
a radio network controller (RNC) mainly used for managing radio resources and controlling the nodeB, wherein the nodeB and the RNC are called in combination as radio network system (RNS), the RNC is connected to the nodeB by an Iub port, the terminal is connected to a packet core network of the UMTS by the RNS;
a serving GPRS support node (SGSN) for storing position information of routing area of a user, being in charge of safety and access control and being connected to the RNS by an Iu port, wherein the Iu port comprises an Iu-C port in signaling plane and an Iu-U port in user plane;
a gateway GPRS support node (GGSN) for constituting the packet core network together with the SGSN, allocating IP address of the terminal and acting as a gateway to external network, wherein the GGSN is internally connected to the SGSN;
a home location register (HLR) used for storing signing contract data for the user and its current SGSN address;
a packet data network (PDN) for providing a packet-based service network for the user, wherein the PDN is connected to the GGSN by a Gi port.

The transmitted data in Fig. 1 is divided into two kinds, data for the user plane and data for the signaling plane. The user plane is mainly used for transmitting service data for the user, while the signaling plane is mainly used for managing the user plane, comprising establishing, releasing and modifying the user plane. A user plane path from a user equipment (UE) to the PDN in the UMTS PS system passes through at least three network elements: the RNC, the SGSN and the GGSN. Accordingly, there are two tunnels: one from the RNC to the SGSN and the other from the SGSN to the GGSN. So this is called as a double-tunnel scheme. Both of the tunnels are based on GPRS tunneling protocol (GTP) and called as GTP-U tunnel.

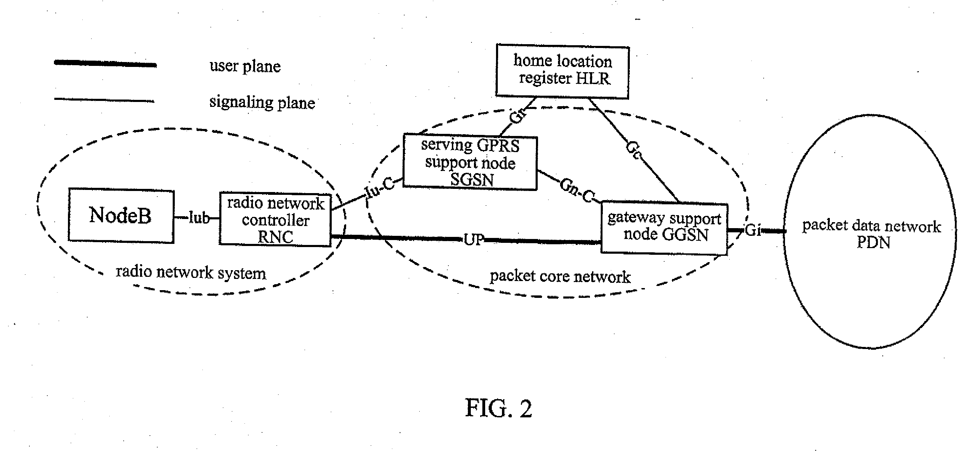

With progressive development of IP multimedia subsystem (IMS) service and extension of other multimedia services, the services have increasingly high requirements for delay and performance of transport layer. Thus the Third Generation Partnership Project (3GPP) organization is carrying on research to separate the SGSN from the user plane path as an individual network element of the signaling plane. The user plane only comprises one tunnel: the GTP-U tunnel from the RNC to the GGSN directly. This is called as a single-tunnel scheme, as shown in Fig. 2.

Compared with the double-tunnel scheme, the single-tunnel scheme is more beneficial to the transmission of multimedia service due to one fewer node in the user plane, and thus data delay is decreased. However, sometimes the double-tunnel scheme is still required, such as when the user roams and needs to access the GGSN to which it belongs, when the user plane needs to be monitored legally at the SGSN, when the user has intelligent service and when the GGSN does not support a direct tunnel scheme. The SGSN determines whether to use the direct tunnel scheme or the double-tunnel scheme.

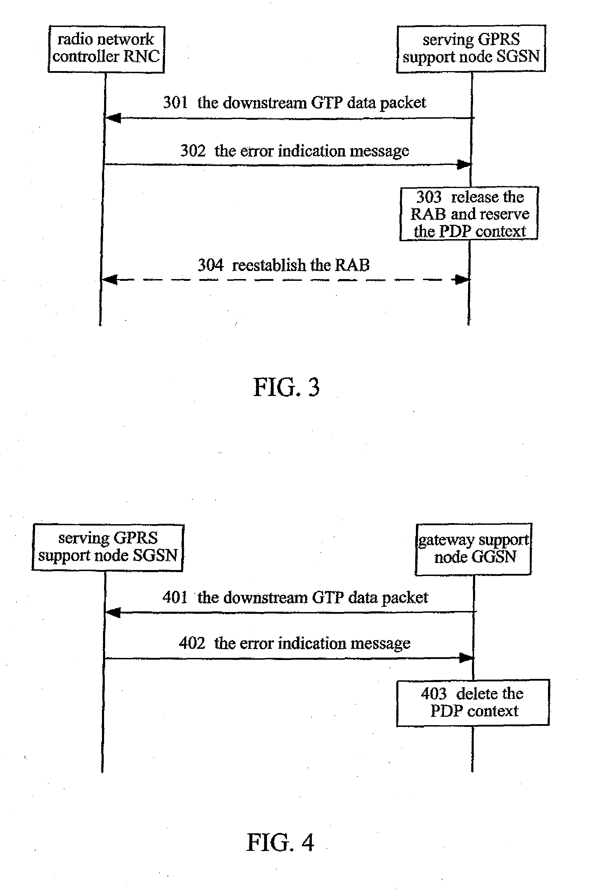

In the current double-tunnel scheme, when the radio network controller (RNC) receives a downstream user plane data packet of the SGSN, the downstream user plane data packet is discarded and a user plane error indication is returned to the SGSN if the RNC determines that the user plane of the RNC is abnormal. After the SGSN receives the error indication, it will release a radio access bearer (RAB) locally and reserve packet data protocol (PDP) context. The SGSN can also select to reestablish the RAB. The process for reestablishing the RAB as shown in Fig. 3 comprises:
step 301: the RNC receives the downstream user plane data packet of the SGSN;
step 302: if the RNC determines that the user plane of the RNC is abnormal, then it returns an error indication message to the SGSN;
step 303: after the SGSN receives the error indication, it will release the RAB locally and reserve the PDP context; and
step 304: the SGSN can also select to reestablish the RAB.

When the SGSN receives the downstream user plane data packet of the GGSN, the downstream user plane data packet is discarded and the user plane error indication is returned to the GGSN if the SGSN determines that the user plane of the SGSN is abnormal. After the GGSN receives the error indication, it will delete the PDP context directly. The process as shown in Fig. 4 comprises the following steps:
step 401: the SGSN receives the downstream user plane data packet of the GGSN;
step 402: if the SGSN determines that the user plane of the SGSN is abnormal, then it returns an error indication to the GGSN; and
step 403: after the GGSN receives the error indication, it deletes the PDP context.

In the single-tunnel scheme, since no modification on the RNC and the GGSN is made, after the direct tunnel is established, it is believed that the error indication comes from the SGSN if the GGSN receives the error indication of the RNC, and then the PDP context is deleted directly. Thus at this time, the PDP context still exists in the SGSN and the UE, so that the PDP context in the SGSN and the UE cannot be deleted and will be suspended.

At present, a method for solving this problem is that user plane tunnel information of the RNC and user plane tunnel information of the SGSN are stored simultaneously in the GGSN. The GGSN deletes the user plane tunnel information of the RNC and uses the user plane tunnel information of the SGSN after receiving the error indication of the RNC. When the next downstream data packet arrives at the GGSN, the GGSN sends the data packet to the SGSN, and the SGSN sends the data packet to the RNC. Subsequent processing is the same as the process described in Fig. 3. One of existing problems in the method is that a tunnel between the SGSN and the GGSN still remains when the direct tunnel is used, so the waste of user plane resources exists.

Therefore, there is a need for a method to resolve the problem that how the GGSN processes the error indication received from the RNC when the direct tunnel is used and the tunnel between the SGSN and the GGSN is deleted.

### Summary of the Invention

A technical problem to be solved by the present invention is to provide a method for processing an error of a radio network controller in a packet domain direct tunnel so as to resolve the problem that how a gateway GPRS support node processes an error indication received from the radio network controller when a direct tunnel is used and a tunnel between a serving GPRS support node and the gateway GPRS support node is deleted.

In order to solve the technology problem described above, the present invention provides a method for processing the error of the radio network controller in the packet domain direct tunnel, whose aim is to avoid packet data protocol context in a user equipment and the serving GPRS support node from being suspended according to this method after the gateway GPRS support node receives the error indication of the radio network controller, thereby keeping the states of the packet data protocol contexts in the user equipment, the serving GPRS support node and the gateway GPRS support node consistent.

A method for processing an error of a radio network controller in a packet domain direct tunnel provided by the present invention comprises the following steps:
after a gateway GPRS support node receives an error indication of the radio network controller, it prevents the following downstream data packets from being sent to the radio network controller continuously; and
the gateway GPRS support node informs a serving GPRS support node that a user plane of the radio network controller is abnormal.

The manner of preventing the following next downstream data packets from being sent to the radio network controller continuously can comprise deleting address and user plane tunnel information of the radio network controller or setting the corresponding packet data protocol context to be invalid.

The gateway GPRS support node can inform the serving GPRS support node that the user plane of the radio network controller is abnormal through update packet data protocol context request message of gateway GPRS support node.

Further, the error indication of the radio network controller can be added in the forth byte of a set of common flags contained in the update packet data protocol context request message of the gateway GPRS support node. Further more, the added error indication of the radio network controller can be positioned at the third bit of the forth byte of the set of common flags.

Further, the serving GPRS support node can return a response message to the gateway GPRS support node after receiving the update packet data protocol context request message of the gateway GPRS support node.

Further, after the serving GPRS support node receives the update packet data protocol context request message of the gateway GPRS support node, the method can also comprises the following step:
step 71: using double tunnels and establishing a tunnel between the serving GPRS support node and the gateway GPRS support node to transmit data.

The step 71 can further comprises the following steps:
step 81: the serving GPRS support node distributes its user plane tunnel information;
step 82: the serving GPRS support node sends the update packet data protocol context request message to the gateway GPRS support node, wherein the update packet data protocol context request message comprises address and the distributed user plane tunnel information of the serving GPRS support node;
step 83: the gateway GPRS support node stores the address and the user plane tunnel information of the serving GPRS support node; and
step 84: the gateway GPRS support node returns the update packet data protocol context response message to the serving GPRS support node.

The step 71 can also comprises the following steps:
step 91: the serving GPRS support node distributes its user plane tunnel information;
step 92: the serving GPRS support node returns the update packet data protocol context response message to the gateway GPRS support node, wherein the update packet data protocol context response message comprises the address and the distributed user plane tunnel information of the serving GPRS support node; and
step 93: the gateway GPRS support node stores the address and the user plane tunnel information of the serving GPRS support node.

After the step 71, data transmission can be performed and the method further comprises the following steps:
step 101: the gateway GPRS support node forwards the received downstream data packet to the serving GPRS support node through the tunnel between the serving GPRS support node and the gateway GPRS support node;
step 102: the serving GPRS support node forwards the downstream data packet to the radio network controller;
step 103: if the radio network controller determines that the user plane of the radio network controller is abnormal, then it returns an error indication to the serving GPRS support node;
step 104: the serving GPRS support node releases a radio access bearer locally and reserves the packet data protocol context after receiving the error indication; and
step 105: the serving GPRS support node reestablishes the radio access bearer between the radio network controller and the serving GPRS support node.

The method can further comprise the following step after the serving GPRS support node receives the update packet data protocol context request message of the gateway GPRS support node:
step 111: reestablishing the direct tunnel and reestablishing a tunnel between the radio network controller and the gateway GPRS support node to transmit data.

The step 111 can further comprise the following steps:
Step 121: the serving GPRS support node initiates a request for reestablishing the radio access bearer to the gateway GPRS support node, wherein the request comprises the address and the user plane tunnel information of the serving GPRS support node;
step 122: the radio network controller returns an assignment response of the radio access bearer after the radio access bearer is established successfully, wherein the response comprises the address and the user plane tunnel information of the radio network controller;
step 123: the serving GPRS support node sends the update packet data protocol context request message to the gateway GPRS support node, wherein the update packet data protocol context request message comprises the address and the user plane tunnel information of the radio network controller;
step 124: the gateway GPRS support node stores the address and the user plane tunnel information of the radio network controller; and
step 125: the gateway GPRS support node returns the update packet data protocol context response message to the serving GPRS support node.

The step 111 can also comprises the following steps:
step 131: the serving GPRS support node initiates a request for reestablishing the radio access bearer to the radio network controller, wherein the request comprises the address and the user plane tunnel information of the gateway GPRS support node;
step 132: the radio network controller returns an assignment response of the radio access bearer after the radio access bearer is established successfully, wherein the response comprises the address and the user plane tunnel information of the radio network controller;
step 133: the serving GPRS support node returns a response message for the update packet data protocol context request message to the gateway GPRS support node, wherein the response message comprises the address and the user plane tunnel information of the radio network controller; and
step 134: the gateway GPRS support node stores the address and the user plane tunnel information of the radio network controller.

The beneficial effect of the present invention is that user plane tunnel resources between the serving GPRS support node and the gateway GPRS support node do not need to be reserved in the case of using the direct tunnel, thereby avoiding the waste of the resources.

### Brief Description of the Drawings

Fig.1 is a system architecture diagram for the double-tunnel scheme of UMTS/GPRS in prior art;
Fig.2 is a system architecture diagram for the single-tunnel scheme of UMTS/GPRS in prior art;
Fig. 3 is a procedure of processing the error indication of the RNC received by the SGSN in the case of the double-tunnel scheme;
Fig. 4 is a procedure of processing the error indication of the SGSN received by the GGSN in the case of the double-tunnel scheme;
Fig. 5 is a procedure of sending the address and the user plane tunnel information of the SGSN in the update PDP context request message to the GGSN when the SGSN uses the double-tunnel scheme;
Fig. 6 is a procedure of sending the address and the user plane tunnel information of the SGSN in the update PDP context response message to the GGSN when the SGSN decides to use the double-tunnel scheme;
Fig. 7 is a procedure of sending the address and the user plane tunnel information of the RNC in the update PDP context request message to the GGSN when the SGSN decides to reestablish the direct tunnel; and
Fig. 8 is a procedure of sending the address and the user plane tunnel information of the RNC in the update PDP context response message to the GGSN when the SGSN reestablishes the direct tunnel.

### Preferred Embodiments of the Invention

In a method provided by the present invention, a GGSN informs a SGSN that a user plane of a RNC is abnormal after receiving an error indication from the RNC, then the SGSN can make the corresponding processing. The specific procedure of processing is as follows:

The GGSN deletes address and user plane tunnel information of the RNC or sets the corresponding PDP context to be invalid, and informs the SGSN that the user plane of the RNC is abnormal by the update PDP context information initiated by the GGSN; after the SGSN receives the update PDP context information, it can reestablish a RAB or distribute user plane tunnel information of the SGSN; the GGSN is informed of the distributed user plane tunnel information or the reestablished user plane tunnel information of the RNC by the update PDP context request message initiated by the SGSN; after the GGSN receives the update PDP context request message, it stores the user plane tunnel information of the RNC or the SGDN sent by the SGSN.

In order to better expound the purposes, technology scheme and advantages of the present invention, the present invention will be further described in detail below in conjunction with the accompany drawings.

The GGSN needs to know whether the error indication comes from the SGSN or it comes from the RNC before the present invention is applied. The currently existing technology is that the GGSN can know whether a direct tunnel is initiated by SGSN according to an indication flag in the update PDP context request message. Thus, if the direct tunnel is initiated, then the GGSN determines that the error indication comes from the RNC; if the double tunnels are initiated, then the GGSN determines that the error indication comes from the SGSN.

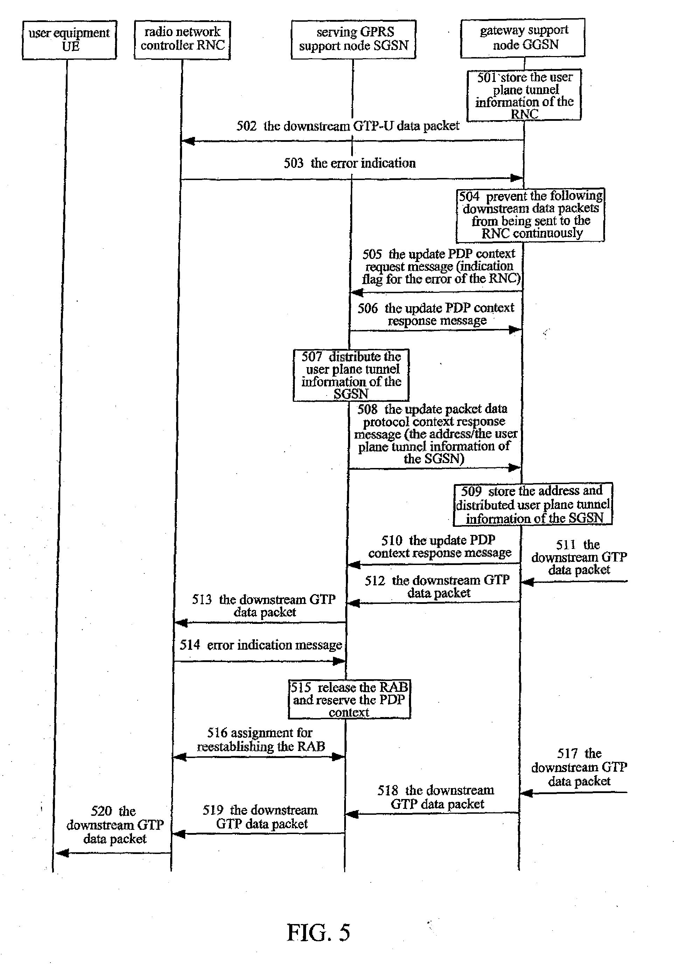

As shown in Fig. 5, the first embodiment is provided. In this embodiment, the GGSN informs the SGSN that the RNC is abnormal according to the present invention after receiving an error indication of the user plane of the RNC; after the SGSN receives the error indication, it decides to use the double tunnels and sends the address and the user plane tunnel information of the SGSN in the PDP context request message to the GGSN. Particularly, the method according to the embodiment comprises the following steps:
step 501: the GGSN stores only the user plane tunnel information of the RNC;
step 502: the GGSN sends a downstream user plane data packet to the RNC;
step 503: if the RNC determines that the user plane is abnormal, then it returns an error indication message to the GGSN;
step 504: after the GGSN receives the error indication message, it prevents the following downstream data packets from being sent to the RNC continuously by for example deleting the address and the user plane tunnel information of the RNC, or not deleting PDP context but setting the PSP context to be invalid;
step 505: the GGSN informs the SGSN that the user plane of the RNC is abnormal by the update PDP context request message, and the update PDP context request message has the indication flag for the error of the RNC;
step 506: when the SGSN receives the update PDP context request message, it returns the update PDP context response message;
step 507: the SGSN selects to use the double tunnels and distributes the user plane tunnel information of the SGSN;
step 508: the SGSN sends the update packet data protocol context request message to the GGSN, wherein the update packet data protocol context request message carries the address and the distributed user plane tunnel information of the SGSN;
step 509: the GGSN stores the received address and user plane tunnel information of the SGSN;
step 510: the GGSN returns the update PDP context response message to the SGSN and the SGSN establishes a tunnel between the SGSN and the GGSN through the steps described above;
step 511: the GGSN receives the downstream data packet after the tunnel between the SGSN and the GGSN is established;
step 512: the GGSN forwards the downstream data packet to the SGSN through the tunnel between the SGSN and the GGSN;
step 513: the SGSN forwards the downstream data packet to the RNC;
step 514: if the RNC determines that the user plane of the RNC is abnormal, then it returns an error indication message to the SGSN;
step 515: after the SGSN receives the error indication, it releases the RAB locally and reserves the PDP context;
step 516: the SGSN reestablishes the RAB between the RNC and the SGSN;
step 517: the GGSN receives the downstream data packet again;
step 518: the GGSN forwards the downstream data packet to the SGSN through the tunnel between the SGSN and the GGSN;
step 519: the SGSN forwards the downstream data packet to the RNC;
step 520: the RNC forwards the downstream data packet to a UE.

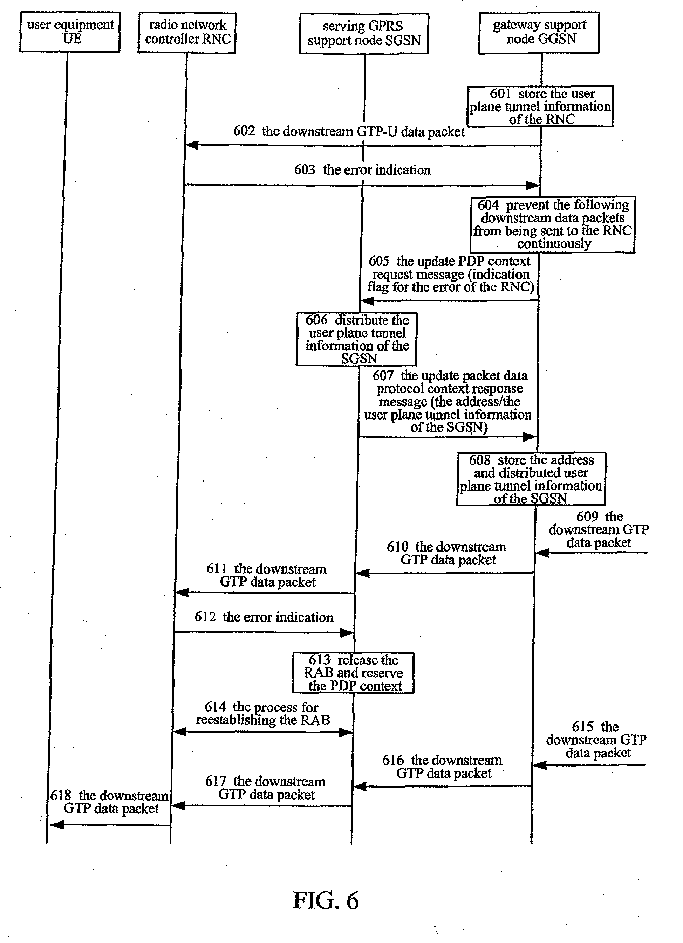

As shown in Fig. 6, the second embodiment is provided. In this embodiment, the GGSN informs the SGSN that the RNC is abnormal according to the present invention after receiving an error indication of the user plane of the RNC; after the SGSN receives the error indication, it decides to use the double tunnels; the SGSN distributes its user plane tunnel information and sends the address and the user plane tunnel information of the SGSN in the PDP context response to the GGSN. Particularly, the method according to the embodiment comprises the following steps:
step 601: the GGSN stores only the user plane tunnel information of the RNC;
step 602: the GGSN sends a downstream user plane data packet to the RNC;
step 603: if the RNC determines that the user plane is abnormal, then it returns an error indication to the GGSN;
step 604: after the GGSN receives the error indication, it prevents the following downstream data packets from being sent to the RNC continuously by for example deleting the address and the user plane tunnel information of the RNC, or not deleting PDP context but setting the PSP context to be invalid;
step 605: the GGSN informs the SGSN that the user plane of the RNC is abnormal by the update PDP context request message, and the update PDP context request message has the indication flag for the error of the RNC;
step 606: when the SGSN receives the update PDP context request message, it decides to use the double tunnels and distributes the user plane tunnel information of the SGSN;
step 607: the SGSN returns the update packet data protocol context response message to the GGSN, wherein the update packet data protocol context response message carries the address and the distributed user plane tunnel information;
step 608: the GGSN stores the received address and user plane tunnel information and the SGSN reestablishes a tunnel between the SGSN and the GGSN through the steps described above;
step 609: the GGSN receives the downstream data packet after the tunnel between the SGSN and the GGSN is established;
step 610: the GGSN forwards the downstream data packet to the SGSN through the tunnel between the SGSN and the GGSN;
step 611: the SGSN forwards the downstream data packet to the RNC;
step 612: if the RNC determines that the user plane of the RNC is abnormal, then it returns an error indication message to the SGSN;
step 613: after the SGSN receives the error indication message, it releases the RAB locally and reserves the PDP context;
step 614: the SGSN reestablishes the RAB between the RNC and the SGSN;
step 615: the GGSN receives the downstream data packet again;
step 616: the GGSN forwards the downstream data packet to the SGSN through the tunnel between the SGSN and the GGSN;
step 617: the SGSN forwards the downstream data packet to the RNC;
step 618: the RNC forwards the downstream data packet to a UE.

The same feature between the second embodiment and the first embodiment is that when the GGSN detects that the RNC is abnormal, it informs the SGSN and the SGSN decides to use the double tunnels, while the different feature between them is that in the first embodiment it is in the update PDP context request message initiated by the SGSN that the address and the user plane tunnel information of the SGSN are sent to the GGSN, while in the second embodiment it is in the update PDP context response message initiated by the SGSN that the address and the user plane tunnel information of the SGSN are sent to the GGSN. There is no address or user plane tunnel information of the SGSN in the update PDP context response message initiated currently by the SGSN, so the field corresponding to the address and the user plane tunnel information of the SGSN needs to be added in the second embodiment.

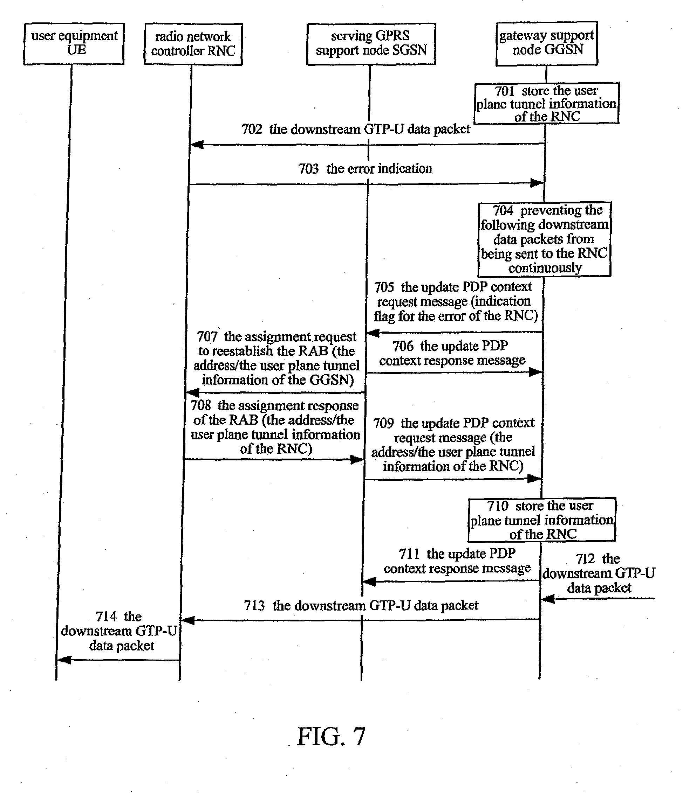

As shown in Fig. 7, the third embodiment is provided. In this embodiment, the GGSN informs the SGSN that the RNC is abnormal according to the present invention after receiving an error indication message of the user plane of the RNC; after the SGSN receives the error indication, it reestablishes the direct tunnel and sends the address and the user plane tunnel information of the RNC in the update PDP context request message to the GGSN. Particularly, the method according to the embodiment comprises the following steps:
step 701: the GGSN stores only the user plane tunnel information of the RNC;
step 702: the GGSN sends a downstream user plane data packet to the RNC;
step 703: if the RNC determines that the user plane is abnormal, then it returns an error indication message to the GGSN;
step 704: after the GGSN receives the error indication message, it prevents the following downstream data packets from being sent to the RNC continuously by for example deleting the address and the user plane tunnel information of the RNC, or not deleting PDP context but setting the PSP context to be invalid;
step 705: the GGSN informs the SGSN that the user plane of the RNC is abnormal by the update PDP context request message, and the update PDP context request message has the indication flag for the error of the RNC;
step 706: when the SGSN receives the update PDP context request message, it returns the update PDP context response message;
step 707: the SGSN selects to reestablish the direct tunnel and initiates an assignment request to reestablish the RAB, wherein the assignment request carries the address and the user plane tunnel information of the GGSN;
step 708: the RNC returns an assignment response of the RAB after the RAB is established successfully, wherein the assignment response also carries the address and the user plane tunnel information of the RNC;
step 709: the SGSN sends the update PDP context request message to the GGSN, wherein the update PDP context request message carries the address and the user plane tunnel information of the RNC;
step 710: the GGSN stores the received address and user plane tunnel information of the RNC;
step 711: the GGSN returns the update PDP context response message to the SGSN and the SGSN reestablishes a direct tunnel between the RNC and the GGSN through the steps described above;
step 712: the GGSN receives the downstream data packet;
step 713: the GGSN forwards the downstream data packet to the RNC through the tunnel between the RNC and the GGSN;
step 714: the SGSN forwards the downstream data packet to a UE.

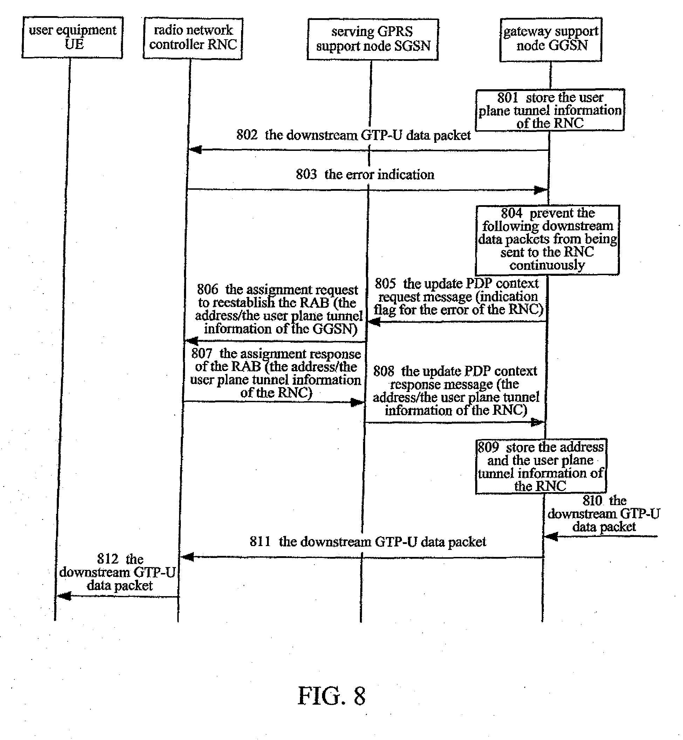

As shown in Fig. 8, the fourth embodiment is provided. In this embodiment, the GGSN informs the SGSN that the RNC is abnormal according to the present invention after receiving an error indication message of the user plane of the RNC; after the SGSN receives the error indication, it reestablishes the direct tunnel and sends the address and the user plane tunnel information of the RNC in the update PDP context response to the GGSN. Particularly, the method according to the embodiment comprises the following steps:
step 801: the GGSN stores only the user plane tunnel information of the RNC;
step 802: the GGSN sends downstream user plane data packet to the RNC;
step 803: if the RNC determines that the user plane is abnormal, then it returns an error indication message to the GGSN;
step 804: after the GGSN receives the error indication, it prevents the following downstream data from being sent to the RNC continuously by for example deleting the address and the user plane tunnel information of the RNC, or not deleting PDP context but setting the PSP context to be invalid;
step 805: the GGSN informs the SGSN that the user plane of the RNC is abnormal by the update PDP context request message, and the update PDP context request message has the indication flag for the error of the RNC;
step 806: the SGSN selects to reestablish the direct tunnel and initiates an assignment request to reestablish the RAB, wherein the assignment request carries the address and the user plane tunnel information of the GGSN;
step 807: the RNC returns an assignment response of the RAB after the RAB is established successfully, wherein the assignment response carries the address and the user plane tunnel information of the RNC;
step 808: the SGSN returns the update PDP context response message to the GGSN, wherein the update PDP context response message also carries the address and the user plane tunnel information of the RNC;
step 809: the GGSN stores the address and the user plane tunnel information of the RNC and the SGSN reestablishes a direct tunnel between the RNC and the GGSN through the steps described above;
step 810: the GGSN receives the downstream data packet;
step 811: the GGSN forwards the downstream data packet to the RNC through the tunnel between the RNC and the GGSN;
step 812: the RNC forwards the downstream data packet to a UE.

The same feature between the fourth embodiment and the third embodiment is that when the GGSN detects that the RNC is abnormal, it informs the SGSN and the SGSN decides to use the direct tunnel, while the different feature between them is that in the third embodiment it is in the update PDP context request message initiated by the SGSN that the address and the user plane tunnel information of the SGSN are sent to the GGSN, while in the fourth embodiment it is in the update PDP context response message initiated by the SGSN that the address and the user plane tunnel information of the SGSN are sent to the GGSN. There is no address or user plane tunnel information of the SGSN in the update PDP context response message initiated currently by the SGSN, so the field corresponding to the address and the user plane tunnel information of the SGSN needs to be added in the fourth embodiment.

The fifth embodiment below further explains how to modify the update PDP context request message initiated by the GGSN. According to Section 7.3.3 in 3GPP TS 29.060 (version 6b0), the update PDP context request message initiated by the GGSN contains a set of common flags. Also, according to Section 7.7.48, the content contained currently in the set of common flags is shown as table 1.

**Table 1: the schematic content contained in the set of common flags in prior art**

| | bit | | | | | | | |
|---|---|---|---|---|---|---|---|---|
| byte | 8 | 7 | 6 | | 4 | 3 | 2 | 1 |
| 1 | Type=148(decimal) | | | | | | | |
| 2 ∼ 3 | length | | | | | | | |
| 4 | void | void | void | void | void | void | MBMS service type | Prohibit header compression |

In order to indicate that the RNC is abnormal, an indication flag needs to be added in the update PDP context request message. A preferred implementation scheme is to define the third bit of the fourth byte of the set of common flags as an indication flag for the error of the RNC, as shown in table 2.

**Table 2: the schematic content contained in the set of common flags in the embodiments according to the present invention**

| | bit | | | | | | | |
|---|---|---|---|---|---|---|---|---|
| byte | 8 | 7 | 6 | 5 | 4 | 3 | 2 | 1 |
| 1 | Type=148(decimal) | | | | | | | |
| 2 ∼ 3 | length | | | | | | | |
| 4 | void | void | void | void | void | Error of the RNC | MBMS service type | Prohibit header compression |

After the SGSN receives the update PDP context request message, it can ignore the indication flag for the error of the RNC if the SGSN determines that the direct tunnel is not used. The SGSN determines whether the direct tunnel is used before sending the assignment request of the RAB according to whether a user roams or whether the user monitors legally. If the SGSN determines that the direct tunnel is used, then the SGSN can determine that the user plane of the RNC is abnormal according to the indication flag. According to the first embodiment to the fourth embodiment, the SGSN can select to reestablish the direct tunnel or to initiates the double tunnels.

In summary, one of the advantages of the scheme is that the tunnel between the SGSN and the GGSN does not need to remain, thereby avoiding the waste of user plane resources.

Various modifications for the above contents can be made by those skilled in the art without departing from the spirit and scope of the invention defined by the appended claims. Thus the scope of the invention is not limited to the above description, but is defined by the scope of the claims.

## Claims

1. A method for processing an error of a radio network controller in a packet domain direct tunnel, comprising the following steps:
a gateway general packet radio service support node preventing following downstream data packets from being sent to the radio network controller continuously after receiving an error indication of the radio network controller; and
the gateway general packet radio service support node informing a serving general packet radio service support node that a user plane of the radio network controller is abnormal.

2. The method according to claim 1, wherein a way of preventing the next downstream data packet from being sent to the radio network controller continuously comprises deleting address and user plane tunnel information of the radio network controller or setting a corresponding packet data protocol context to be invalid.

3. The method according to claim 1, wherein the gateway general packet radio service support node informs the serving general packet radio service support node that the user plane of the radio network controller is abnormal through an update packet data protocol context request message of gateway general packet radio service support node.

4. The method according to claim 3, wherein the error indication of the radio network controller is added in a forth byte of a set of common flags contained in the update packet data protocol context request message of the gateway general packet radio service support node.

5. The method according to claim 4, wherein the added error indication of the radio network controller is positioned at a third bit of the forth byte of the set of common flags.

6. The method according to claim 3, wherein the serving general packet radio service support node returns a response message to the gateway general packet radio service support node after receiving the update packet data protocol context request message of the gateway general packet radio service support node.

7. The method according to claim 3, wherein after the serving general packet radio service support node receives the update packet data protocol context request message of the gateway general packet radio service support node, the method further comprises the following step:
step 71: using double tunnels and establishing a tunnel between the serving general packet radio service support node and the gateway general packet radio service support node to transmit data.

8. The method according to claim 7, wherein the step 71 further comprises the following steps:
step 81: the serving general packet radio service support node distributing its user plane tunnel information;
step 82: the serving general packet radio service support node sending the update packet data protocol context request message to the gateway general packet radio service support node, wherein the update packet data protocol context request message comprises the address and the distributed user plane tunnel information of the serving general packet radio service support node;
step 83: the gateway general packet radio service support node storing the address and the user plane tunnel information of the serving general packet radio service support node; and
step 84: the gateway general packet radio service support node returning the update packet data protocol context response message to the serving general packet radio service support node.

9. The method according to claim 7, wherein the step 71 further comprises the following steps:
step 91: the serving general packet radio service support node distributing its user plane tunnel information;
step 92: the serving general packet radio service support node returning the update packet data protocol context response message to the gateway general packet radio service support node, wherein the update packet data protocol context response message comprises the address and the distributed user plane tunnel information of the serving general packet radio service support node; and
step 93: the gateway general packet radio service support node storing the address and the user plane tunnel information of the serving general packet radio service support node.

10. The method according to claim 7, wherein after the step 71, data transmission is performed and the method further comprises the following steps:
step 101: the gateway general packet radio service support node forwarding the received downstream data packet to the serving general packet radio service support node through the tunnel between the serving general packet radio service support node and the gateway general packet radio service support node;
step 102: the serving general packet radio service support node forwarding the downstream data packet to the radio network controller;
step 103: the radio network controller returning the error indication to the serving general packet radio service support node if the radio network controller determines that the user plane of the radio network controller is abnormal;
step 104: the serving general packet radio service support node releasing a radio access bearer locally and reserving the packet data protocol context after receiving the error indication; and
step 105: the serving general packet radio service support node reestablishing the radio access bearer between the radio network controller and the serving general packet radio service support node.

11. The method according to claim 3, wherein the method further comprises the following step after the serving general packet radio service support node receives the update packet data protocol context request message of the gateway general packet radio service support node:
step 111: step of reestablishing the direct tunnel, reestablishing the tunnel between the radio network controller and the gateway general packet radio service support node to transmit data.

12. The method according to claim 11, wherein the step 111 further comprises the following steps:
Step 121: the serving general packet radio service support node initiating a request for reestablishing the radio access bearer to the gateway general packet radio service support node, wherein the request comprises the address and the user plane tunnel information of the serving general packet radio service support node;
step 122: the radio network controller returning an assignment response of the radio access bearer after the radio access bearer is established successfully, wherein the response comprises the address and the user plane tunnel information of the radio network controller;
step 123: the serving general packet radio service support node sending the update packet data protocol context request message to the gateway general packet radio service support node, wherein the update packet data protocol context request message comprises the address and the user plane tunnel information of the radio network controller;
step 124: the gateway general packet radio service support node storing the address and the user plane tunnel information of the radio network controller; and
step 125: the gateway general packet radio service support node returning the update packet data protocol context response message to the serving general packet radio service support node.

13. The method according to claim 11, wherein the step 111 further comprises the following steps:
step 131: the serving general packet radio service support node initiating the request for reestablishing the radio access bearer to the radio network controller, wherein the request comprises the address and the user plane tunnel information of the gateway general packet radio service support node;
step 132: the radio network controller returning the assignment response of the radio access bearer after the radio access bearer is established successfully, wherein the response comprises the address and the user plane tunnel information of the radio network controller;
step 133: the serving general packet radio service support node returning the response message for the update packet data protocol context request message to the gateway general packet radio service support node, wherein the response message comprises the address and the user plane tunnel information of the radio network controller; and
step 134: the gateway general packet radio service support node storing the address and the user plane tunnel information of the radio network controller.
